# EUROPEAN PATENT SPECIFICATION

(11) **EP 3 505 027 B1**
(45) Date of publication and mention of the grant of the patent: **19.02.2020**
(21) Application number: 18152010.7
(22) Date of filing: 17.01.2018
(51) Int. Cl.: A47J 45/10

(54) **AN ADJUSTABLE DETACHABLE HANDLE FOR PANS**
VERSTELLBARER ABNEHMBARER HANDGRIFF FÜR PFANNEN
POIGNÉE DÉTACHABLE RÉGLABLE POUR POÊLES

(30) Priority: 28.12.2017 CN 201721875794 U
(43) Date of publication of application: 03.07.2019
(73) Proprietor: FEM Industries Co., Ltd., 215555 ChangSu Jiangsu (CN)
(72) Inventor: JIN, Minghe, ChangSu, Jiangsu 215555 (CN); LIN, Rixie, ChangSu, Jiangsu 215555 (CN)
(74) Representative: Huang, Liwei

(56) References cited:
- WO-A1-2009/113757
- FR-A1- 2 842 719
- FR-A1- 3 017 040
- US-A- 5 704 092
- US-A1- 2010 007 158

## Description

### Technical field

The present invention relates to the technical field of cookware, particularly involving a handle for pans, which is detachable and adjustable.

### Background art

Pan is a cookware frequently used in daily life. The pans in prior art may be divided into two types: pans with handles and pans without handles.

As to the pans with handles, the handle and the cook body are usually fixed together in non-detachable form. When the handle is permanently fixed to the pan, it brings some problems that the pan occupies too much room, and therefore brings more troubles in wash or storage. As to the pans without handles, e.g. the inner tanks of electrical rice cookers, the soup pots, the baking or grilling plates, and the inner tanks of pressure cookers, etc., people usually need some thermal insulating pads when holding up such pans, in order not to burn their hands. It is therefore inconvenience that people can not hold such pans casually at any time.

US 5704092 discloses a handle designed for a container, equipped with a displacement means of a lever 12, wherein a compensator spring 19 is provided between the level 12 and link 20, to form a locking means. Besides, the handle is equipped with a releasing portion 24, and the user has to push down the releasing portion 24 when opening the handle.

US 2010/0007158A1 discloses a detachable handle wherein the releasing unit includes a hook step 19 formed on a front end of the operating lever 9, a releasing button that is provided with a hooking portion 20 that is hooked on or released from the hook step 19 and rotatably coupled to a through hole of the cover 3 by a hinge shaft 22.

### Contents of the invention

Considering the deficiencies existing in the prior art, our invention provides an adjustable detachable handle, with which it is possible to hold the cook body directly, safely and reliably, although the cook body is not equipped with a permanent handle. This detachable handle of the present invention can be used for various pans of different types and of different sizes. Its structure is so reasonable that the manufacture cost can be cheap, and the operation can be very quick and easy when attaching it to or removing it from the cook body.

The present invention provides an adjustable detachable handle for pans, as described in our claim 1.

Preferably, secondary pins are used to connect the locking rod with the lower handle body, to connect the locking rod with the connecting rod, and to connect the connecting rod with the movable rake.

Preferably, the front part of the lower handle body is equipped with a protective cover.

Preferably, the elastic member is a spring.

Preferably, the movable rake has a clamping part equipped with a corrugated inner surface.

Preferably, the first pin is locked by a lower slot on the top side of the lower handle body and an upper slot on the bottom side of the upper handle body.

Preferably, the upper handle body and the lower handle body are assembled together by screws in front and rear parts.

When said detachable handle for pans is in use, the pan wall is put between the removable clamping part and the lower handle body. After that, the user should press the locking rod upwards. On one hand, the connecting rod pushes the opening actuator, and the opening actuator rotates. On the other hand, the connecting rod pushes the movable rake backwards, which brings the clamping part close to the lower handle body, and therefore clamps the pan body safely and reliably. Such an operation during use is very simple.

Therefore, the present invention is suitable to be used in various pans of different types and of different sizes. Its structure is reasonable, the manufacture cost is cheap, and the operation of attaching it to or removing it from the cook body is very easy. The handle can be used to lift pans directly, safely and reliably.

### Brief description of the drawings

Figure 1 is an exploded view drawing, which shows assembly components of a handle according to a preferred embodiment of the present invention.
Figure 2 is a schematic view showing some detailed structures for the upper handle body of the handle according to a preferred embodiment of the present invention.
Figure 3 is a schematic view showing some detailed structures for the lower handle body of the handle according to a preferred embodiment of the present invention.
Figure 4 is a sectional view representing a closed state of the handle according to a preferred embodiment of the present invention.
Figure 5 is a sectional view representing an open state of the handle according to a preferred embodiment of the present invention.

### Reference signs in the drawings:

1. upper handle body; 2. lower handle body; 3. opening actuator; 4. locking rod; 5. connecting rod; 6. movable rake; 7. elastic member; 8. first pin; 9. screw; 10. secondary pin; 11. upper slot; 12. opening passage; 21. platform groove; 211. preserved passage; 22. lower slot; 23. front part of the lower handle body; 24. protective cover; 31. actuating end; 32. working end; 51. sloping surface; 61. fixing part of the movable rake; 62. working passage; 63. clamping part.

### Embodiments of the invention

Here are preferred embodiments of present invention described with reference to the drawings, so that it is easier for the skilled person to understand the advantages and characteristics of present invention.

### Embodiment 1:

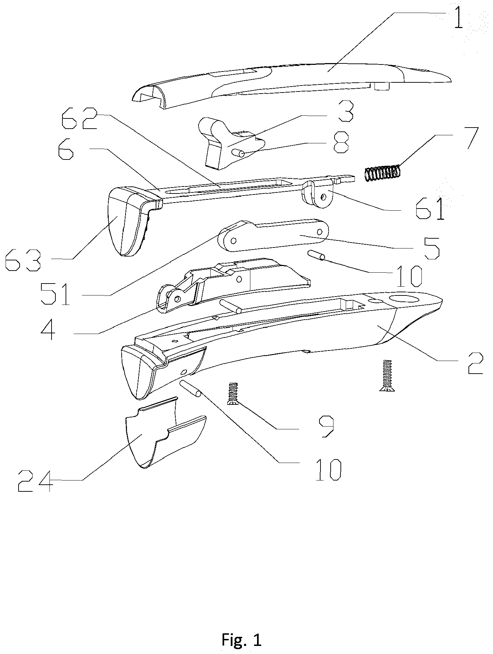

A preferred adjustable detachable handle for pans according to our invention is presented in Figures 1 to 5.

A movable rake 6, which is preferably a steel rake, is movably placed in a platform groove 21 at upper side of the lower handle body 2. The rear end of the movable rake 6 is connected to the lower handle body 2 through an elastic member 7, which is for example a spring. The movable rake 6 has a fixing part 61 near its rear end, and the fixing part 61 of the movable rake 6 passes through a preserved passage 211 within the platform groove 21 and is connected with the rear part of the connecting rod 5, for example through a secondary pin 10. The preserved passage 211 is normally located in the middle part of the platform groove 21. The front part of the locking rod 4 is connected with the front part of the lower handle body 2, for example through a secondary pin 10. The middle part of the locking rod 4 is connected with the front part of the connecting rod 5, for example through a secondary pin 10.

The opening actuator 3 is equipped with a first pin 8, which is preferably inserted between a lower slot 22 on the top side of the lower handle body 2 and an upper slot 11 on the bottom side of the upper handle body 1.

All the secondary pins 10 and the first pin 8 are preferably made of steel, for example stainless steel.

Preferably, the upper handle body 1 and the lower handle body 2 are assembled together by screws 9 in front and rear parts.

Referring to the drawings of Figs. 1 to 3, as well as the Figs. 4 and 5, the opening actuator 3 has an actuating end 31 passing through an opening passage 12 in the upper handle body 1, and a working end 32 passing through a working passage 62 in the movable rake 6. In a closed state, the working end 32 of the opening actuator 3 would be pressed by the connecting rod 5 and therefore lies against a sloping surface 51 in the front part of the connecting rod 5.

The use operation of the detachable handle for pans can be described as follows:

### <Closed State>

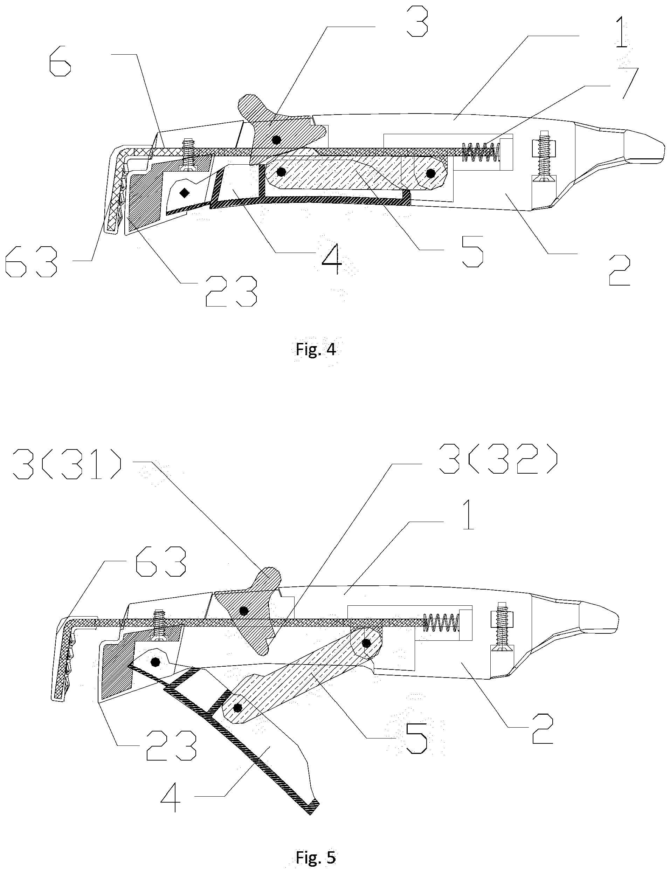

In a closed state like in Fig. 4, a clamping part 63 of the movable rake 6 is kept close to the front part 23 of the lower handle body 2, maybe clamping a pan body therebetween. The elastic member 7 such as a spring is compressed.

The pan body clamped by the clamping part 63, as well as the compressed elastic member 7 would give the movable rake 6 a tendency to move forward.

However, this tendency is stopped by the connecting rod 5 and/or the opening actuator 3, wherein a part of the connecting rod 5 and/or a part of the opening actuator 3 is positioned within the working passage 62 of the movable rake 6 in the closed state.

The tendency of the movable rake 6 moving forward is transferred to the connecting rod 5 as a forward force, and then transferred to the locking rod 4 as a torque of counterclockweise rotation around the pin connecting the locking rod 4 with the lower handle body 2.

For example, the connecting rod 5 and the rear half part of the locking rod 4 are positioned in the same horizontal line in the closed state. This structure can help transferring the forward force on the connecting rod 5 into a conterclockweise torque on the locking rod 4. The rear half part of the locking rod 4 means the half part on the rear side from the pin connecting the locking rod 4 with the connecting rod 5, wherein the pin connecting the locking rod 4 with the connecting rod 5 can divide the locking rod 4 into a front half part and a rear half part.

For example, locking rod 4 may be equipped with a baffle plate, preferably a vertical plate, in front of the connecting rod 5. In the closed state, the connecting rod 5 gets in touch with the baffle plate in the locking rod 4, and thereby transfers the forward force on the connecting rod 5 into a conterclockweise torque on the locking rod 4.

The conterclockweise torque on the locking rod 4 drives the rear part of the locking rod 4 and the connecting rod 5 to move upwards, which is however blocked by the upper handle body 1 itself, and maybe also blocked by a stepped part in opening actuator 3, see Fig. 4.

Thereby, in the closed state the handle is self-locked in a very reliably way.

### <Open State>

In order to open the handle, the user has to pull the actuating end 31 of the opening actuator 3 backwards, so that the opening actuator 3 rotates around the pin 8, and the working end 32 of the opening actuator 3 pushes the connecting rod 5 and the locking rod 4 downwards, which brings the locking rod 4 a torque of clockweise rotation which breaks the closed state.

Meanwhile, the compressed elastic member 7 also helps to give the connecting rod 5 and the locking rod 4 such a push to rotate the locking rod 4 clockweise, see Fig. 5.

Meanwhile, the compressed elastic member 7 drives the movable rake 6 forwards and separates the clamping part 63 thereof from the front part 23 of the lower handle body 2.

In the open state, the connecting rod 5 and the locking rod 4 present a certain angle therebetween, see Fig. 5.

In order to clamp a pan body, the user should put the pan wall between the clamping part 63 and the front edge 23 of the lower handle body 2. After that, the user should press the locking rod 4 upwards. On one hand, the connecting rod 5 pushes the opening actuator 3, and the opening actuator 3 rotates. On the other hand, the connecting rod 5 pushes the movable rake 6 backwards, which brings the clamping part 63 close to the front edge 23 of the lower handle body 2, and the handle therefore comes to the closed state like Fig. 4, and clamps the pan body safely and reliably.

Such operations during use are very simple.

Hence, such construction provides a firm and reliable clamping of the pans. This construction is simple but effective. This handle can satisfy the requirement of high durability and heavy loading, which is practical and useful to customers.

Besides, the present invention may also achieve an advantage that the handle is suitable for clamping various pans with different wall thicknesses. It happens often in real life that the pans of different types would have different thicknesses of the pan walls. The elastic member 7 and the sloping surface of the connecting rod 5 in our invention provides an adjustable space so that handle can be always firmly closed even though the distance between the clamping part 63 and the front edge 23 of the lower handle body 2 (corresponding to the thickness of the pan wall) might be changing in a certain range.

### Embodiment 2:

As a further preferred embodiment, embodiment 2 differs from embodiment 1 in that the movable rake 6 has a clamping part 63 equipped with a corrugated inner surface. For example, the front part of the movable steel rake is so formed to provide a clamping surface to clamp the pan body. For example, the movable clamping part of the movable steel rake is covered by a heat-resisting plastic material or a silicon material, which preferably has a corrugated surface at the inner side, see Fig. 4 and Fig. 5.

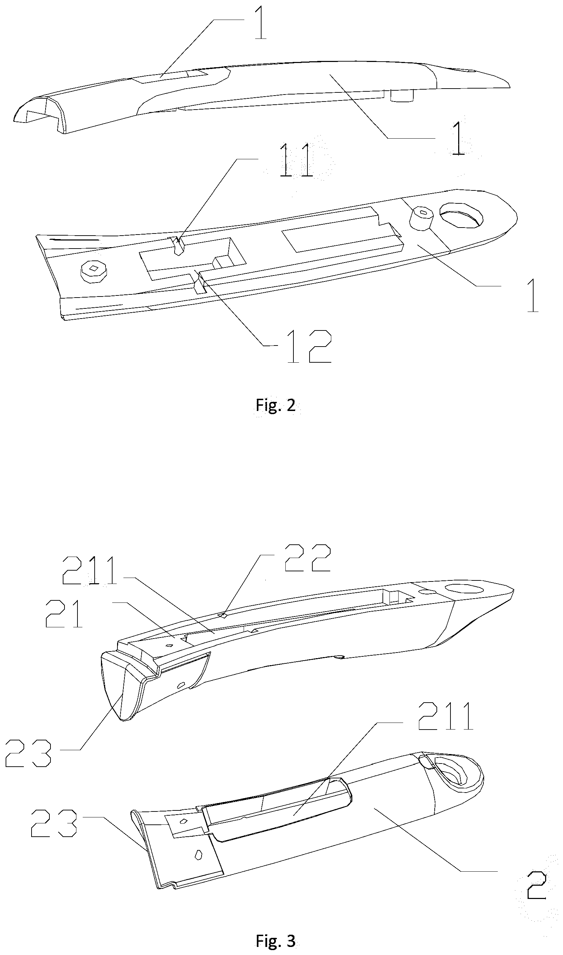

More preferably, the front part 23 of the lower handle body 2, which is a relative stationary part for clamping the pan body, is equipped with a protective cover 24 at the bottom side, see Fig. 1 and Fig. 3.

### Embodiment 3:

In an embodiment of embodiment 3, the movable rake 6 is made of steel such as stainless steel, while the upper handle body 1, the lower handle body 2, the opening actuator 3, the locking rod 4, and the connecting rod 5 are made of plastic materials of high toughness.

### Embodiment 4:

Embodiment 4 differs from embodiment 3 in that all the movable rake 6, the upper handle body 1, the lower handle body 2, the locking rod 4, and optionally also the connecting rod 5, are made of steel such as stainless steel.

Above embodiments are intended to describe the idea and advantages of the present invention, in order to help a skilled person to understand and carry out the present invention. However it is not desired to limit the scope of invention according to the exact embodiments. Various modifications, alternative constructions, changes and equivalents, will be readily employed in relevant technical fields directly or indirectly, without departing from the scope of the claims.

## Claims

1. An adjustable detachable handle for pans, comprising: an upper handle body (1), a lower handle body (2), an opening actuator (3), a locking rod (4), a connecting rod (5) and a movable rake (6),
wherein said movable rake (6) is movably placed in a platform groove (21) in the lower handle body (2),
a rear end of the movable rake (6) is connected to the lower handle body (2) through an elastic member (7),
a fixing part (61) of the movable rake (6) passes through a preserved passage (211) within the platform groove (21) and is connected with a rear part of the connecting rod (5),
a front part of the locking rod (4) is connected with a front part of the lower handle body (2),
a middle part of the locking rod (4) is connected with a front part of the connecting rod (5),
**characterized in that**
the opening actuator (3) is equipped with a first pin (8) and therefore rotatable,
said opening actuator (3) has an actuating end (31) passing through an opening passage (12) in the upper handle body (1), and a working end (32) passing through a working passage (62) in the movable rake (6),
the working end (32) of the opening actuator (3) is so shaped as to touch against a sloping surface (51) in a front part of the connecting rod (5);
the adjustable detachable handle is so configured that when a user pulls the actuating end (31) of the opening actuator (3) backwards, the opening actuator (3) rotates around the first pin (8), and the working end (32) of the opening actuator (3) pushes the connecting rod (5) and the locking rod (4) downwards, which brings the locking rod (4) a torque of clockwise rotation which breaks the closed state.

2. The adjustable detachable handle for pans according to claim 1, wherein secondary pins (10) are used to connect the locking rod (4) is with the lower handle body (2), to connect the locking rod (4) with the connecting rod (5), and to connect the connecting rod (5) with the movable rake (6).

3. The adjustable detachable handle for pans according to any proceeding claim, wherein the front part (23) of the lower handle body (2) is equipped with a protective cover (24).

4. The adjustable detachable handle for pans according to any proceeding claim, wherein the elastic member (7) is a spring.

5. The adjustable detachable handle for pans according to any proceeding claim, wherein the movable rake (6) has a clamping part (63) equipped with a corrugated inner surface.

6. The adjustable detachable handle for pans according to any proceeding claim, wherein the first pin (8) is locked by a lower slot (22) on the top side of the lower handle body (2) and an upper slot (11) on the bottom side of the upper handle body (1),

7. The adjustable detachable handle for pans according to any proceeding claim, wherein the upper handle body (1) and the lower handle body (2) are assembled together by screws (9) in front and rear parts.

## Patentansprüche

1. Einstellbarer abnehmbarer Griff für Pfannen, aufweisend: einen oberen Griffkörper (1), einen unteren Griffkörper (2), einen Öffnungsantrieb (3), eine Verschlussstange (4), eine Verbindungsstange (5) und eine bewegliche Harke (6),
wobei die bewegliche Harke (6) beweglich in einer Plattformnut (21) in dem unteren Griffkörper (2) angeordnet ist,
wobei ein hinteres Ende der beweglichen Harke (6) mit dem unteren Griffkörper (2) durch ein elastisches Element (7) verbunden ist,
wobei ein Befestigungsteil (61) der beweglichen Harke (6) durch einen innerhalb der Plattformnut (21) erhaltenen Durchgang (211) läuft und mit einem hinteren Teil der Verbindungsstange (5) verbunden ist,
wobei ein vorderer Teil der Verschlussstange (4) mit einem vorderen Teil des unteren Griffkörpers (2) verbunden ist,
wobei ein mittlerer Teil der Verschlussstange (4) mit einem vorderen Teil der Verbindungsstange (5) verbunden ist,
**dadurch gekennzeichnet, dass**
der Öffnungsantrieb (3) mit einem ersten Stift (8) ausgestattet und daher drehbar ausgebildet ist,
wobei der Öffnungsantrieb (3) ein Betätigungsende (31) aufweist, das durch einen Öffnungsdurchgang (12) in dem oberen Griffkörper (1) läuft, und ein Arbeitsende (32), das durch einen Arbeitsdurchgang (62) in der beweglichen Harke (6) läuft,
wobei das Arbeitsende (32) des Öffnungsantriebs (3) so geformt ist, dass es eine geneigte Fläche (51) in einem vorderen Teil der Verbindungsstange (5) berührt;
wobei der einstellbare abnehmbare Griff derart ausgebildet ist, dass wenn ein Nutzer das Betätigungsende (31) des Öffnungsantriebs (3) nach hinten zieht, sich der Öffnungsantrieb (3) um den ersten Stift (8) dreht und das Arbeitsende (32) des Öffnungsantriebs (3) die Verbindungsstange (5) und die Verschlussstange (4) nach unten drückt, was der Verschlussstange (4) ein Drehmoment in Uhrzeigersinn gibt, was den geschlossenen Zustand aufhebt.

2. Einstellbarer abnehmbarer Griff für Pfannen gemäß Anspruch 1, wobei Sekundärstifte (10) verwendet werden, um die Verschlussstange (4) mit dem unteren Griffkörper (2) zu verbinden, die Verschlussstange (4) mit der Verbindungsstange (5) zu verbinden und die Verbindungsstange (5) mit der beweglichen Harke (6) zu verbinden.

3. Einstellbarer abnehmbarer Griff für Pfannen gemäß irgendeinem vorherigen Anspruch, wobei der vordere Bereich (23) des unteren Griffkörpers (2) mit einer Schutzabdeckung (24) versehen ist.

4. Einstellbarer abnehmbarer Griff für Pfannen gemäß irgendeinem vorherigen Anspruch, wobei das elastische Element (7) eine Feder ist.

5. Einstellbarer abnehmbarer Griff für Pfannen gemäß irgendeinem vorherigen Anspruch, wobei die bewegliche Harke (6) einen Klemmbereich (63) aufweist, der mit einer geriffelten Innenfläche versehen ist.

6. Einstellbarer abnehmbarer Griff für Pfannen gemäß irgendeinem vorherigen Anspruch, wobei der erste Stift (8) durch einen unteren Schlitz (22) auf der Oberseite des unteren Griffkörpers (2) und einen oberen Schlitz (11) auf der Unterseite des oberen Griffkörpers (1) verriegelt ist.

7. Einstellbarer abnehmbarer Griff für Pfannen gemäß irgendeinem vorherigen Anspruch, wobei der obere Griffkörper (1) und der untere Griffkörper (2) durch Schrauben (9) in den vorderen und hinteren Bereichen miteinander zusammengebaut sind.

## Revendications

1. Poignée réglable et amovible pour des poêles, comprenant : un corps de poignée supérieur (1), un corps de poignée inférieur (2), un actionneur d'ouverture (3), une tige de verrouillage (4), une tige de liaison (5) et un râteau mobile (6),
dans lequel ledit râteau mobile (6) est disposé de manière mobile dans une rainure de plateforme (21) dans le corps de poignée inférieur (2),
une extrémité arrière du râteau mobile (6) étant reliée au corps de poignée inférieur (2) à travers un élément élastique (7),
une partie de fixation (61) du râteau mobile (6) passant à travers un passage préservé (211) à l'intérieur de la rainure de plateforme (21) et étant reliée à une partie arrière de la tige de liaison (5),
une partie avant de la tige de verrouillage (4) étant reliée à une partie avant du corps de poignée inférieur (2),
une partie centrale de la tige de verrouillage (49 étant reliée à une partie avant de la tige de liaison (5),
**caractérisée en ce que**
l'actionneur d'ouverture (3) est équipé d'une première goupille (8) et est ainsi rotatif,
ledit actionneur d'ouverture (3) ayant une extrémité de manœuvre (31) passant à travers un passage d'ouverture (12) dans le corps de poignée supérieur (1) et une extrémité de travail (32) passant à travers un passage de travail (62) dans le râteau mobile (6),
l'extrémité de travail (32) de l'actionneur d'ouverture (3) étant formée de sorte qu'elle touche une surface inclinée (51) dans une partie avant de la tige de liaison (5) ;
la poignée réglable et amovible étant configurée de sorte que si l'utilisateur tire l'extrémité de manœuvre (31) de l'actionneur d'ouverture (3) vers l'arrière, l'actionneur d'ouverture tourne autour de la première goupille (8) et l'extrémité de travail (32) de l'actionneur d'ouverture (3) pousse la tige de liaison (5) et la tige de verrouillage (4) vers le bas, ce qui donne une coupe de rotation dans le sens des aiguilles d'une montre à la tige de verrouillage (4), ce qui relâche l'état de verrouillage.

2. Poignée réglable et amovible pour des poêles selon la revendication 1, dans lequel des goupilles secondaires (10) sont utilisées pour relier la tige de verrouillage (4) au corps de poignée inférieur (2), pour relier la tige de verrouillage (4) à la tige de liaison (5) et pour relier la tige de liaison (5) au râteau mobile (6).

3. Poignée réglable et amovible pour des poêles selon l'une quelconque des revendications précédentes, dans lequel la partie avant (23) du corps de poignée inférieur (2) est équipée d'une couverture de protection (24).

4. Poignée réglable et amovible pour des poêles selon l'une quelconque des revendications précédentes, dans lequel l'élément élastique (7) est un ressort.

5. Poignée réglable et amovible pour des poêles selon l'une quelconque des revendications précédentes, dans lequel le râteau mobile (6) comprend une partie de serrage (63) munie d'une surface intérieure ondulée.

6. Poignée réglable et amovible pour des poêles selon l'une quelconque des revendications précédentes, dans lequel la première goupille (8) est verrouillée par une fente inférieure (22) sur la face supérieure du corps de poignée inférieur (2) et par une fente supérieure (11) sur la face inférieure du corps de poignée supérieur (1).

7. Poignée réglable et amovible pour des poêles selon l'une quelconque des revendications précédentes, dans lequel le corps de poignée supérieur (1) et le corps de poignée inférieur (2) sont assemblés ensemble par des vis (9) dans des parties avant et arrière.
